# EUROPÄISCHE PATENTSCHRIFT

(11) **EP 0 838 022 B1**
(45) Veröffentlichungstag und Bekanntmachung des Hinweises auf die Patenterteilung: **04.10.2000**
(21) Anmeldenummer: 96925670.0
(22) Anmeldetag: 05.07.1996
(51) Int. Cl.: G01M 3/34, G01M 3/32

(54) **VERFAHREN UND VORRICHTUNG ZUM PRÜFEN VON VERFORMBAREN BEHÄLTERN AUF DICHTIGKEIT**
PROCESS AND DEVICE FOR TESTING DEFORMABLE CONTAINERS FOR TIGHTNESS
PROCEDE ET DISPOSITIF DE CONTROLE DE L'ETANCHEITE DE RECIPIENTS DEFORMABLES

(30) Priorität: 07.07.1995 DE 19524844
(43) Veröffentlichungstag der Anmeldung: 29.04.1998
(73) Patentinhaber: HEUFT SYSTEMTECHNIK GMBH, 56659 Burgbrohl (DE)
(72) Erfinder: HEUFT, Bernhard, D-56659 Burgbrohl (DE)
(74) Vertreter: Abitz, Walter, Dr.-Ing.
(86) Internationale Anmeldenummer: EP9602967
(87) Internationale Veröffentlichungsnummer: WO9703343

(56) Entgegenhaltungen:
- US-A- 3 762 213
- US-A- 4 146 467

## Beschreibung

Die Erfindung betrifft ein Verfahren und eine Vorrichtung zum Prüfen von verformbaren Behältern, die durch eigene oder fremde Rückstellkraft ihre ursprüngliche Form wiedererlangen, insbesondere Kunststoffbehältern, auf Dichtigkeit, wobei in dem Behälter ein Unterdruck erzeugt wird und eine Änderung des Unterdrucks ermittelt wird.

Aufgrund der Dünnwandigkeit und der Gefahr altersbedingter Versprödung des Materials sind bei sogenannten Mehrweg-Kunststoffbehältern, insbesondere Getränkeflaschen, im Gegensatz zu Mehrweg-Glasflaschen Innendruckprüfungen vor einer Wiederbefüllung notwendig. Durch die Innendruckprüfung sollen Löcher und Versprödungsrisse in der Behälterwand erkannt werden.

Dies wird bislang recht aufwendig mittels eines Rundläufers mit Sternrad vorgenommen, wobei jede Flasche in einem Sternradgefach transportiert wird, hierbei mit einem definierten Druck beaufschlagt wird und Druckänderungen nach einer bestimmten Zeit oder einer bestimmten Wegstrecke über eine Differenzdruckmeßeinrichtung gemessen und ausgewertet werden. Die Meßeinrichtung muß dabei punktgenau und dichtend auf die Flaschenmündung aufgesetzt werden. Dies läßt sich durch die definierte Führung der Flaschen mittels des Sternrades relativ einfach erreichen.

Ein Verfahren der eingangs genannten Art ist aus US-A-3,762,213 bekannt. Der Unterdruck in dem Behälter wird dabei dadurch erzeugt, daß ein Zylinder mit verschiebbarem Kolben auf die Behälteröffnung aufgesetzt wird und dann der Kolben zurückgezogen wird. Der Behälter hängt aufgrund des Unterdrucks dann an dem Zylinder und die Zeitdauer, die der Behälter an dem Zylinder hängt, wird als Maß für die Dichtheit des Behälters verwendet.

Aus US-A-4 862 732 und DE-A-41 21 867 ist ein Verfahren zur Prüfung der Dichtigkeit von mit Deckeln verschlossenen Behältern bekannt, bei dem durch Verformung des Behälters ein Überdruck in dem Behälter erzeugt wird. Als Maß für den erzeugten Überdruck wird das Aufwölben des Behälterdeckels verwendet.

Der Erfindung liegt die Aufgabe zugrunde, eine Innendruckprüfung der eingangs genannten Art so auszubilden, daß die Behälter in beliebigen zeitlichen und räumlichen Abständen der Innendruckprüfung unterzogen werden können.

Erfindungsgemäß wird diese Aufgabe durch ein Verfahren mit dem Merkmalen von Patentanspruch 1 und durch eine Vorrichtung mit dem Merkmalen von Patentanspruch 5 gelöst.

Zur Herstellung des Unterdrucks wird der Behälter zunächst verformt, dann wird die Behälteröffnung verschlossen, worauf die Verformungskraft von dem Behälter weggenommen wird, so daß dieser durch seine Formelastizität wieder seine normale Form annimmt, was zur Entstehung des Unterdrucks in dem Behälter führt. Beim Arbeiten mit Unterdruck ist insbesondere von Vorteil, daß das Verschließen der Behälteröffnung durch einfaches Auflegen eines elastischen Bandes auf die Behälteröffnung erfolgt. Durch den nach dem Wegnehmen der Verformungskraft entstehenden Unterdruck wird das elastische Band an die Behälteröffnung angesaugt und verschließt diese dadurch dicht. Innerhalb der Behälteröffnung bildet das elastische Band dabei eine Vertiefung. Aus der Größe der Vertiefung kann in einfacher Weise die Höhe des Unterdrucks abgeleitet werden.

Bei Getränkeabfüllanlagen gibt es das Prinzip der Förderung unter Staudruck und das dazu gegensätzliche Prinzip der drucklosen Förderung. Förderung unter Staudruck bedeutet, daß die Behälter auf den Transporteuren zwischen den einzelnen Stationen, z.B. Waschstation, Kontrolleur, Füllstation, sich stauen und gegeneinander drücken. Dies wird dadurch erreicht, daß die Behälter einer Station oder einem vorgeschalteten Sternrad schneller zugeführt werden als sie von der Station gehandhabt oder von dem Sternrad weitergetaktet werden. Die Behälter stauen sich also vor der Station oder dem Sternrad, d.h. der Einlaufschnecke des Sternrades. Moderne Abfüllanlagen transportieren die Behälter dagegen drucklos, also ohne Staudruck, was bedeutet, daß die Behälter in beliebiger zeitlicher Aufeinanderfolge und mit beliebigem gegenseitigem Abstand zu den einzelnen Meß- und Bearbeitungsstationen transportiert werden und dort geprüft und bearbeitet werden. Bei der drucklosen Förderung ist es also nicht notwendig, daß die Behälter in einem bestimmten Takt oder Raster durch die einzelnen Stationen geführt werden. Ein besonderer Vorteil der vorliegenden Erfindung besteht darin, daß die Innendruckprüfung im Rahmen einer solchen staudrucklosen Förderung erfolgen kann. Die Innendruckprüfung erfolgt, während die Flaschen auf einem Transporteur, z.B. einer Gliederkette oder einem Förderband, geradlinig gefördert werden. Der mechanische Aufbau ist daher äußerst einfach und es wird nur sehr wenig Raum beansprucht.

Die Innendruckprüfung erfolgt durch Erzeugung von Unterdruck in dem Behälter oder der Flasche und weist zwei wesentliche Komponenten auf, nämlich eine Einrichtung zur Erzeugung eines Unterdrucks in dem Kunststoffbehälter gegenüber dem Umgebungsdruck und eine Meßeinrichtung zur Überprüfung des Unterdrucks.

Die Einrichtung zur Erzeugung des Unterdrucks besteht aus einer Quetscheinrichtung mit zwei gegenüberliegenden gummierten Rollen, zwei gegenüberliegenden umlaufenden Riemen, deren Abstand kleiner ist als der Behälterdurchmesser oder zwei gegenüberliegenden, ausfahrbaren Zylindern, so daß die Behälter beim Durchgang durch diesen Quetschspalt durch seitliches Zusammendrücken verformt werden. Gleichzeitig mit dem Zusammendrücken des Behälters wird auf die nach oben zeigende Mündungsöffnung des Behälters ein Band aufgelegt. Das Band dichtet die Behälteröffnung ab. Wenn der Behälter die Quetscheinrichtung verläßt, so bildet sich die Verformung zurück und nimmt der Behälter durch die Formspannkraft der Behälterwände seine ursprüngliche Gestalt an. Da die Behälteröffnung durch das aufgelegte Band abgedichtet ist, entsteht dabei im Behälter der Unterdruck. Der zu prüfende Behälter läuft dann eine längere Prüfstrecke von z.B. 1 bis 3 m, wobei das auf der Behälteröffnung aufliegende Dichtungsband mitläuft. Im Falle einer Undichtigkeit, z.B. eines Loches oder eines Versprödungsrisses wird der Unterdruck im Behälter während dieser Strecke ganz oder teilweise abgebaut.

Am Ende der vorgegebenen Prüfstrecke wird das Dichtungsband mechanisch zwangsweise von dem Behälter wieder abgelöst, indem es nach oben weggezogen wird, wobei der Behälter gegebenenfalls durch eine Zwangsführung am Geländer oder durch Riemen festgehalten wird. Bei ausreichender Weglänge ist eine Entscheidung zwischen dichten und undichten Behältern an dieser Stelle sehr einfach durchzuführen, indem der Ablösepunkt des Dichtungsbandes mittels der Meßeinrichtung, z.B. Lichtschranke, überwacht wird. Bei dichten Behältern wird das obere Dichtungsband noch fest auf der Behälteröffnung anliegen und wird sich erst spät durch die mechanische Krafteinwirkung von der Behälteröffnung lösen; bei undichten Behältern liegt es nur lose auf und löst sich zu einem wesentlich früheren Zeitpunkt. Dieser Unterschied kann mittels einer Lichtschranke einfach überwacht werden. Bei dichten Behältern erzeugt das Abziehen des Dichtungsbandes von der Behälteröffnung ein charakteristisches Geräusch, so daß auch eine akustische Unterscheidung möglich ist.

Genauere Messungen oder eine Verkürzung der Prüfstrecke, um die Anlage kompakt zu halten, können durch aufwendigere Meßeinrichtungen erreicht werden. Z.B. wäre es möglich, durch eine Formerkennung mittels CCD-Kameras oder Lichtschranken festzustellen, ob oder um wieviel der Kunststoffbehälter am Ende der Wegstrecke noch deformiert ist.

Eine weitere Möglichkeit besteht darin, das Dichtungsband aus einem relativ dünnen und elastischen Material, z.B. Latex, zu fertigen, so daß es beim Aufliegen auf der Behälteröffnung durch den Unterdruck eine konkave Wölbung erfährt, die proportional zum Unterdruck ist. Das Ausmaß dieser Wölbung kann am Ende der Wegstrecke mittels geeigneter Abtaster, z.B. Ultraschallsensoren oder Weglängenmeßeinrichtungen, mittels Licht und bei einer metallisierten Oberfläche des Bandes auch mittels induktiver Wegmesser ermittelt werden. Eine zusätzliche Erhöhung der Meßgenauigkeit ist hierbei noch durch eine Präferenzmessung mittels einer zweiten gleichartigen Meßeinrichtung am Anfang des Dichtungsbandes möglich. Durch Vergleich der von den beiden Meßeinrichtungen gelieferten Meßwerte können auch kleinere Undichtigkeiten wie Haarrisse erkannt werden.

In besonders einfacher Weise kann die Dichtigkeit der Behälter dadurch festgestellt werden, daß die Behälter mittels des in ihnen erzeugten Unterdruckes an dem Dichtungsband angesaugt werden und an dem Dichtungsband hängend über eine Lücke in dem Transporteur hinweg transportiert werden. Dichte Behälter werden durch den in ihnen herrschenden Unterdruck an dem Dichtungsband festgesaugt gehalten, so daß sie ohne Schwierigkeiten an dem Dichtungsband hängend über die Lücke transportiert werden. Der Unterdruck in undichten Behältern wird dagegen nicht ausreichen, um die Behälter sich an dem Dichtungsband festsaugen zu lassen. Undichte Behälter werden sich daher innerhalb der Lücke von dem Dichtungsband lösen und herunterfallen. Sie können z.B. innerhalb eines Auffangkorbes aufgefangen werden, der sich unter der Lücke des Transporteurs befindet.

Die Vorteile des neuen Verfahrens gegenüber der herkömmlichen Druckprüfung liegen neben dem bereits erwähnten wesentlich einfacheren Aufbau, insbesondere aber in der Genauigkeit und der erhöhten Zuverlässigkeit. Die erhöhte Zuverlässigkeit kommt schon alleine durch die Tatsache zustande, daß beim erfindungsgemäßen Verfahren die Kunststoffbehälter durch die Quetscheinrichtung einer mechanischen Beanspruchung ausgesetzt werden, wodurch feine Haarrisse weiter geöffnet werden und altersbedingte Versprödungs- oder Schwachstellen bereits während der Prüfung zum Bruch führen, während bei den herkömmlichen Prüfverfahren die Behälter nur mit einem leichten Überdruck beaufschlagt werden, der die Wandungen selbst kaum beeinflußt, so daß die mechanische Belastung erst später beim Befüllen der Behälter auftritt und sich erst dann Brüche zeigen.

Bei einer solchen linear aufgebauten Meßeinrichtung kann die Prüfstrecke ohne Probleme und ohne großen Aufwand fast beliebig verlängert werden, so daß bei Bedarf sehr viel Zeit für die Überwachung eines Druckabfalls zur Verfügung steht. Dagegen ist das Verlängern der Prüfstrecke in einem Sternrundläufer nur sehr bedingt und mit sehr hohem Aufwand möglich, da jede Verlängerung der Prüfstrecke um eine Flasche eine weitere Meßeinrichtung bedeutet.

Ein weiterer Nachteil des Sternrundläufers besteht darin, daß er aus sehr vielen einzelnen Meßeinrichtungen besteht und damit neben dem meßtechnischen Aufwand auch das Ausfallrisiko sowie die Kalibrierungsarbeiten wesentlich vergrößert werden. Es ist fast unmöglich, die 16 oder 24 Meßstellen eines Rundläufers exakt gleich zu kalibrieren. Dieses Problem wird bei einer linear aufgebauten Meßeinrichtung vermieden.

Ein Ausführunsbeispiel der Erfindung wird nachfolgend anhand der Zeichnung erläutert. Es zeigen:
- Fig. 1: die Vorrichtung zur Innendruckprüfung von der Seite;
- Fig. 2: die Vorrichtung zur Innendruckprüfung von oben;
- Fig. 3: in einer Detailansicht das auf der Behälteröffnung aufliegende Dichtungsband und
- Fig. 4: ein anderes Ausführungsbeispiel der Vorrichtung zur Innendruckprüfung.

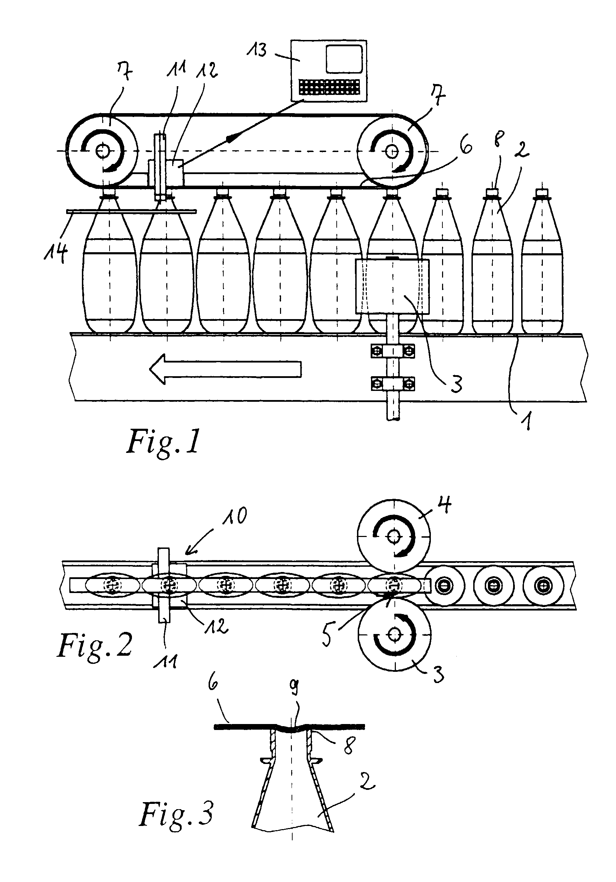

Gemäß Fig. 1 und 2 wird auf einem Transporteur in Form eines geradlinigen Förderbandes 1 eine Anzahl von Kunststoffbehältern 2 geführt. An gegenüberliegenden Positionen sind neben dem Förderband 1 zwei Gummirollen 3, 4 um eine vertikale Achse drehbar angeordnet. Die Gummirollen 3, 4 werden mit einer Oberflächengeschwindigkeit angetrieben, die gleich der Geschwindigkeit des Förderbandes 1 ist. Die Gummirollen 3, 4 bilden zwischen sich einen Quetschspalt 5, der so bemessen ist, daß die Behälter 2 um etwa 30% ihres Durchmessers zusammengedrückt werden. Die Breite des Quetschspaltes 5 und die Elastizität der Gummirollen 3, 4 sind so gewählt, daß die Behälter 2 lediglich verformt werden, daß die Behälterwand jedoch nicht geknickt oder in sonstiger Weise bleibend verformt wird, so daß die Behälter 2 nach dem Durchgang durch den Quetschspalt 5 wieder ihre ursprüngliche Form annehmen.

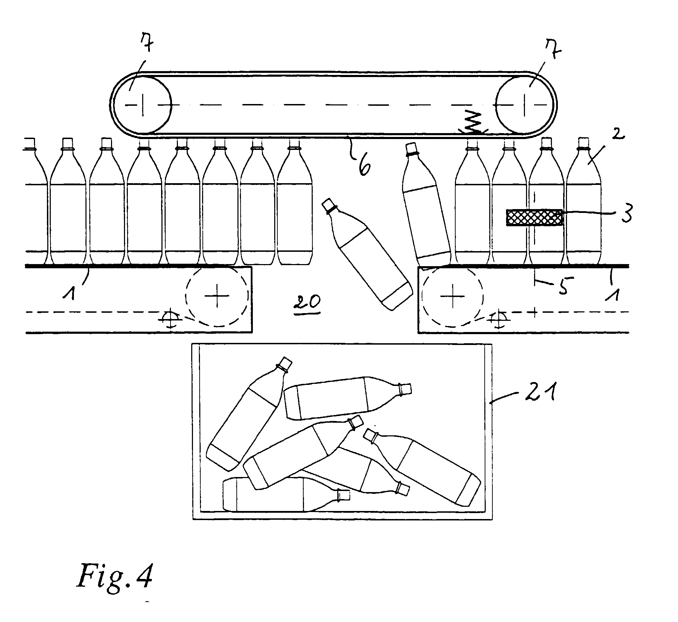

In einem der Höhe der Kunststoffbehälter 2 entsprechenden Abstand über dem Förderband 1 ist ein Dichtungsband 6 durch zwei Führungsrollen 7 geführt. Die eine Rolle 7 ist über dem Quetschspalt 5 positioniert, so daß das Dichtungsband 6 zum Zeitpunkt der stärksten Verformung eines Behälters 2 auf dessen Öffnung 8 aufgesetzt wird. Die andere Führungsrolle 7 ist in Bewegungsrichtung in einem Abstand von ca. 3 m von dem Quetschspalt 5 angeordnet, so daß das Dichtungsband 6 während eines Weges von 3 m auf den Behälteröffnungen 8 aufliegt. Das Dichtungsband 6 ist elastisch und paßt sich der Mündungsöffnung und den Behälterhöhentoleranzen selbsttätig an. Das Dichtungsband 6 besteht z.B. aus dünnem Latex. Wie bereits erwähnt kehrt jeder Behälter 2 nach dem Passieren des Quetschspaltes 5 zu seiner ursprünglichen Form zurück. Dadurch entsteht in dem Behälter 2 ein Unterdruck, durch den das Dichtungsband 6 von der Behälteröffnung 8 angesaugt wird und sich fest gegen sie legt. Das Dichtungsband 6 bildet dabei eine konkave Vertiefung 9 (Fig. 3).

Die Kunststoffbehälter 2 werden in diesem Zustand bis zu einer Meßeinrichtung 10 weitertransportiert, die sich vor der zweiten Führungsrolle 7 befindet. Intakte Behälter 2 halten den Unterdruck, so daß die Vertiefung 9 noch vorhanden ist, wenn der Behälter 2 die Meßeinrichtung 10 erreicht. Undichte Behälter, z.B. Behälter mit Versprödungsrissen, halten den Unterdruck nicht, so daß die Vertiefung 9 sich nicht bildet oder rasch nach dem Durchgang durch den Quetschspalt 5 verschwindet.

Beim Erreichen der Meßeinrichtung 10 durchlaufen die Behälter 2 eine Triggerlichtschranke 11, die einen Weglängenmesser 12 aktiviert. Der Weglängenmesser 12 stellt das Ausmaß der Vertiefung 9 fest und sendet ein analoges Meßsignal zu einem Auswertecomputer 13, der nach einem voreingestellten Grenzwert bestimmt, ob der im Behälter 2 vorhandene Unterdruck noch ausreichend ist oder ob ein defekter Behälter 2 vorliegt. Der Weglängenmesser ist von bekannter Bauart und wird daher hier nicht im einzelnen beschrieben. Durch die nach der Meßeinrichtung 10 angeordnete zweite Führungsrolle 7 wird das auf der Behälteröffnung 8 aufliegende Dichtungsband 6 zwangsweise abgezogen, wozu der Behälter 2 durch eine zusätzliche Führungsschiene 14 daran gehindert wird, dem Dichtungsband 6 bei seinem Weg um die zweite Führungsrolle 7 zu folgen, so daß er sich von dem Dichtungsband 6 lösen muß.

Bei dem in Fig. 4 dargestellten Ausführungsbeispiel ist das Förderband 1 innerhalb der Prüfstrecke unterbrochen, so daß eine Lücke 20 besteht, innerhalb der die Behälter 2 nicht von dem Transportband 1 abgestützt werden. Bezüglich der Quetscheinrichtung (Gummirollen 3, 4) und der Anordnung und dem Antrieb des Dichtungsbandes 6 entspricht dieses Ausführungsbeispiel dem der Fig. 1 bis 3. Die Behälter 2 werden durch den Unterdruck, der in ihnen nach dem Durchgang durch den Quetschspalt 5 und das Anlegen des Dichtungsbandes 6 erzeugt wird, an das Dichtungsband 6 angesaugt. Die fehlerfreien Behälter 2 bleiben innerhalb der gesamten Prüfstrecke an dem Dichtungsband 6 haften und werden in diesem Zustand problemlos über die Lücke 20 hinweg transportiert. In undichten Behältern 2 entsteht dagegen kein Unterdruck oder ist der Unterdruck nur von so kurzer Dauer, daß sie nicht oder nicht ausreichend an dem Dichtungsband haften, um über die Lücke 20 transportiert zu werden. Undichte Behälter 2 fallen vielmehr innerhalb der Lücke 20 von dem Dichtungsband 6 ab und werden in einem unter der Lücke 20 befindlichen Auffangkorb 21 aufgefangen. Die dichten, an dem Dichtungsband 6 anhaftenden Behälter 2 werden nach der Lücke 20 wieder auf das Förderband 1 gesetzt und werden dann in der im Zusammenhang mit dem Beispiel der Fig. 1 bis 3 beschriebenen Maßnahmen zwangsweise von dem Dichtungsband 6 gelöst.

## Patentansprüche

1. Verfahren zum Prüfen von verformbaren Behältern (2) auf Dichtigkeit, wobei in dem Behälter (2) ein Unterdruck erzeugt wird und danach der Innendruck des Behälters gemessen wird,
dadurch gekennzeichnet,
- daß zur Erzeugung des Unterdrucks zunächst der Behälter (2) verformt wird, dann die Behälteröffnung (8) verschlossen wird und daraufhin die Verformungskraft von dem Behälter (2) weggenommen wird.

2. Verfahren nach Anspruch 1, dadurch gekennzeichnet, daß ein Dichtungsband (6) auf die Behälteröffnung (8) aufgelegt wird, um den Unterdruck in dem Behälter (2) aufrechtzuerhalten.

3. Verfahren nach Anspruch 2, dadurch gekennzeichnet, daß aus der in dem Dichtungsband (6) im Bereich der Behälteröffnung (8) durch den Unterdruck erzeugten Vertiefung (9) die Höhe des Unterdrucks bestimmt wird.

4. Verfahren nach Anspruch 2, dadurch gekennzeichnet, daß in dem Behälter (2) ein solcher Unterdruck erzeugt wird, daß ein dichter Behälter (2) durch den Unterdruck an das Dichtungsband (6) angesaugt wird und ohne weitere Unterstützung transportiert wird, während ein defekter Behälter (2) von dem Dichtungsband (6) abfällt.

5. Vorrichtung zur Durchführung des Verfahrens nach einem der Ansprüche 1 bis 4, mit einem Transporteur (1) für die Behälter (2) und mit einer Quetscheinrichtung (3, 4), die einen Quetschspalt (5) aufweist, durch den die auf dem Transporteur (1) transportierten Behälter (2) verformt werden,
dadurch gekennzeichnet,
- daß im Abstand über dem Transporteur (1) ein endloses Dichtungsband (6) durch mindestens zwei Führungsrollen (7) geführt wird, wobei die erste Führungsrolle (7) über dem Quetschspalt (5) angeordnet ist.

6. Vorrichtung nach Anspruch 5, dadurch gekennzeichnet, daß vor der zweiten Führungsrolle (7) eine Meßeinrichtung zur Bestimmung des Unterdruckes in dem Behälter (2) angeordnet ist.

7. Vorrichtung nach Anspruch 6, dadurch gekennzeichnet, daß die Meßeinrichtung (10) einen Weglängenmesser (12) enthält, der die Größe einer Vertiefung (9) in dem Dichtungsband (6) ermittelt.

8. Vorrichtung nach Anspruch 5, dadurch gekennzeichnet, daß der Transporteur (1) im Bereich unterhalb des Dichtungsbandes (6) unterbrochen (20) ist, so daß dichte Behälter (2) angesaugt an dem Dichtungsband (6) über die Lücke (20) gefördert werden, während sich defekte Behälter (2) spätestens innerhalb der Lücke (20) von dem Dichtungsband (6) lösen und in die Lücke (20) fallen.

## Claims

1. Method for testing deformable containers (2) for tightness, wherein a negative pressure is generated in the container (2) and the internal pressure of the container is then measured, characterized in that
- for the purpose of generating the negative pressure, the container (2) is first deformed, the container opening (8) is then closed and the deformation force is thereupon removed from the container (2).

2. Method according to Claim 1, characterized in that a sealing strip (6) is set on the container opening (8) in order to maintain the negative pressure in the container (2).

3. Method according to Claim 2, characterized in that the level of the negative pressure is determined from the depression (9) produced in the sealing strip (6), in the region of the container opening (8), by the negative pressure.

4. Method according to Claim 2, characterized in that a negative pressure is generated in the container (2) such that a tight container (2) is sucked on to the sealing strip (6) by the negative pressure and is transported without further support, whereas a defective container (2) falls from the sealing strip (6).

5. Device for the execution of the method according to one of Claims 1 to 4, comprising a transporter (1) for the containers (2) and a compression device (3, 4) which comprises a compression gap (5) by means of which the containers (2) transported on the transporter (1) are deformed, characterized in that
- an endless sealing strip (6) is guided by at least two guide rollers (7) at a distance above the transporter (1), the first guide roller (7) being disposed above the compression gap (5).

6. Device according to Claim 5, characterized in that a measuring device for determining the negative pressure in the container (2) is disposed before the second guide roller (7).

7. Device according to Claim 6, characterized in that the measuring device (10) comprises a path length measuring device (12) which determines the magnitude of a depression (9) in the sealing strip (6).

8. Device according to Claim 5, characterized in that in the region below the sealing strip (6) the transporter (1) is interrupted (20), so that tight containers (2), sucked on to the sealing strip (6), are conveyed over the gap (20), whereas defective containers (2) separate from the sealing strip (6) within the gap (20), at the latest, and fall into the gap (20).

## Revendications

1. Procédé de contrôle, en ce qui concerne l'étanchéité, de récipients (2) déformables, selon lequel une dépression est créée dans le récipient (2), puis la pression intérieure du récipient est mesurée,
caractérisé en ce que,
- pour produire la dépression, le récipient (2) est d'abord déformé, puis l'ouverture (8) du récipient est obturée et, ensuite, l'application de la force de déformation sur le récipient (2) est supprimée.

2. Procédé suivant la revendication 1, caractérisé en ce qu'une bande d'étanchéité (6) est appliquée sur l'ouverture de récipient (8), afin de maintenir la dépression dans le récipient (2).

3. Procédé suivant la revendication 2, caractérisé en ce que le niveau de la dépression est déterminé à partir du renfoncement (9) produit dans la bande d'étanchéité (6), dans la zone de l'ouverture de récipient (8), sous l'effet de la dépression.

4. Procédé suivant la revendication 2, caractérisé en ce qu'il est créé dans le récipient (2) une dépression telle qu'un récipient (2) étanche est maintenu appliqué par aspiration sur la bande d'étanchéité (6) sous l'effet de la dépression et est transporté sans moyens auxiliaires supplémentaires, tandis qu'un récipient (2) défectueux tombe de la bande d'étanchéité (6).

5. Dispositif de mise en oeuvre du procédé suivant l'une des revendications 1 à 4, comprenant un transporteur (1) pour le récipient (2) et un dispositif d'écrasement (3, 4) qui comporte un intervalle d'écrasement (5) au moyen duquel les récipients (2) transportés sur le transporteur (1) sont déformés,
caractérisé en ce que
- une bande d'étanchéité (6) sans fin est guidée à distance au-dessus du transporteur (1) au moyen d'au moins deux rouleaux de guidage (7), le premier rouleau de guidage (7) étant disposé au-dessus de l'intervalle d'écrasement (5).

6. Dispositif suivant la revendication 5, caractérisé en ce qu'un dispositif de mesure servant à déterminer la dépression dans le récipient (2) est disposé en amont du second rouleau de guidage (7).

7. Dispositif suivant la revendication 6, caractérisé en ce que le dispositif de mesure (10) peut contient des moyens de mesure de distance parcourue (12) qui déterminent la grandeur d'un renfoncement (9) se présentant dans la bande d'étanchéité (6).

8. Dispositif suivant la revendication 5, caractérisé en ce que le transporteur (1) est interrompu (20) dans la zone située au-dessous de la bande d'étanchéité (6), de sorte que des récipients (2) étanches sont déplacés au-dessus de l'espace vide (20) en étant maintenus appliqués par aspiration sur la bande d'étanchéité (6), tandis que des récipients (2) défectueux se séparent de la bande d'étanchéité (6) au plus tard dans les limites de l'espace vide (20) et tombent dans l'espace vide (20).
